# EUROPEAN PATENT SPECIFICATION

(11) **EP 2 862 803 B1**
(45) Date of publication and mention of the grant of the patent: **30.11.2016**
(21) Application number: 14185904.1
(22) Date of filing: 23.09.2014
(51) Int. Cl.: B64D 13/06

(54) **Pneumatic system for an aircraft**
Pneumatisches System für ein Flugzeug
Système pneumatique pour un aéronef

(30) Priority: 21.10.2013 GB 201318572
(43) Date of publication of application: 22.04.2015
(73) Proprietor: Rolls-Royce plc, London SW1E 6AT (GB)
(72) Inventor: Moes, Thierry, Derby, DE22 1DE (GB); Stieger, Rory Douglas, Derby, Derbyshire DE72 5WH (GB); Hillel, Malcolm Laurence, Derby, Derbyshire DE72 2AJ (GB); Vyas, Parag, Nottingham, NG2 5HG (GB)
(74) Representative: Rolls-Royce plc

(56) References cited:
- EP-A2- 2 476 882
- EP-A2- 2 492 199
- EP-A2- 2 543 595

## Description

### Field of the Invention

The present invention relates to a pneumatic system for an aircraft, and a method of operating a pneumatic system for an aircraft.

### Background to the Invention

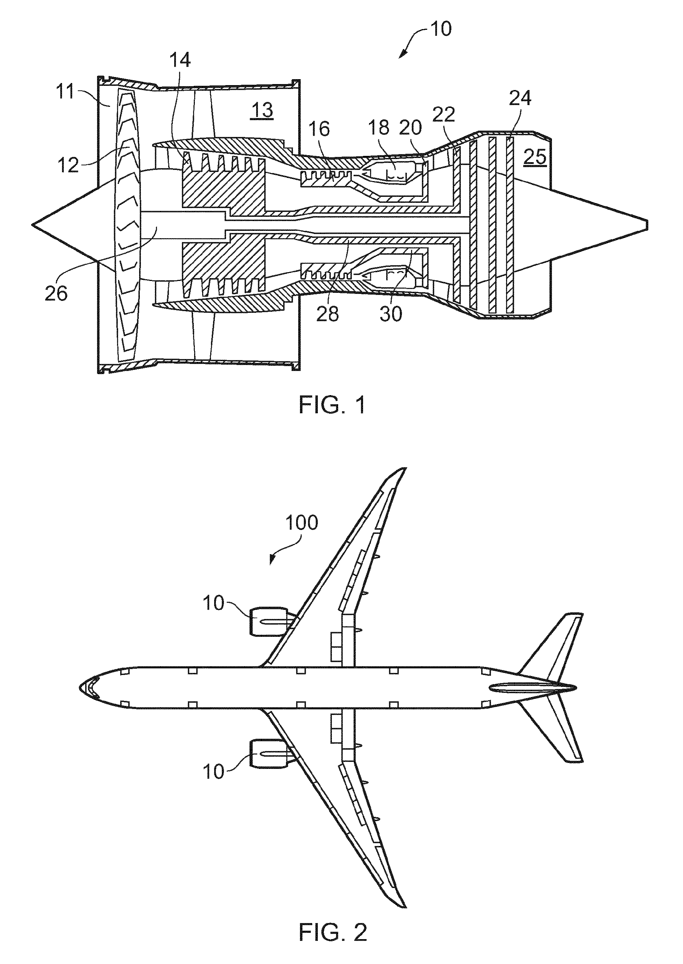

Fig. 1 shows a gas turbine engine 10. The gas turbine engine 10 is mounted on an aircraft 100 in pairs, as shown in Fig. 2. The engine 10 comprises, in axial flow series, an air intake duct 11, an intake fan 12, a bypass duct 13, an intermediate pressure compressor 14, a high pressure compressor 16, a combustor 18, a high pressure turbine 20, an intermediate pressure turbine 22, a low pressure turbine 24 and an exhaust nozzle 25. The fan 12, compressors 14, 16 and turbines 20, 22, 24 all rotate about the major axis of the gas turbine engine 10 and so define the axial direction of gas turbine engine.

Air is drawn through the air intake duct 11 by the intake fan 12 where it is accelerated. A significant portion of the airflow is discharged through the bypass duct 13 generating a corresponding portion of the engine 10 thrust. The remainder is drawn through the intermediate pressure compressor 14 into what is termed the core of the engine 10 where the air is compressed. A further stage of compression takes place in the high pressure compressor 16 before the air is mixed with fuel and burned in the combustor 18. The resulting hot working fluid is discharged through the high pressure turbine 20, the intermediate pressure turbine 22 and the low pressure turbine 24 in series, where work is extracted from the working fluid. The work extracted drives the intake fan 12, the intermediate pressure compressor 14 and the high pressure compressor 16 via shafts 26, 28, 30. The working fluid, which has reduced in pressure and temperature, is then expelled through the exhaust nozzle 25 and generates the remaining portion of the engine 10 thrust.

Aircraft powered by gas turbine engines generally comprise an aircraft pneumatic system comprising an environmental control system (ECS) powered by high pressure air provided by a bleed air system (BAS). Bleed air systems generally comprise bleed ports 32, 34 which duct air from the compressor 14, 16 for use in the aircraft pneumatic system, such as the (ECS) and wing de-icing. The ECS provides cabin air to the cabin interior at a required temperature, pressure and flow rate.

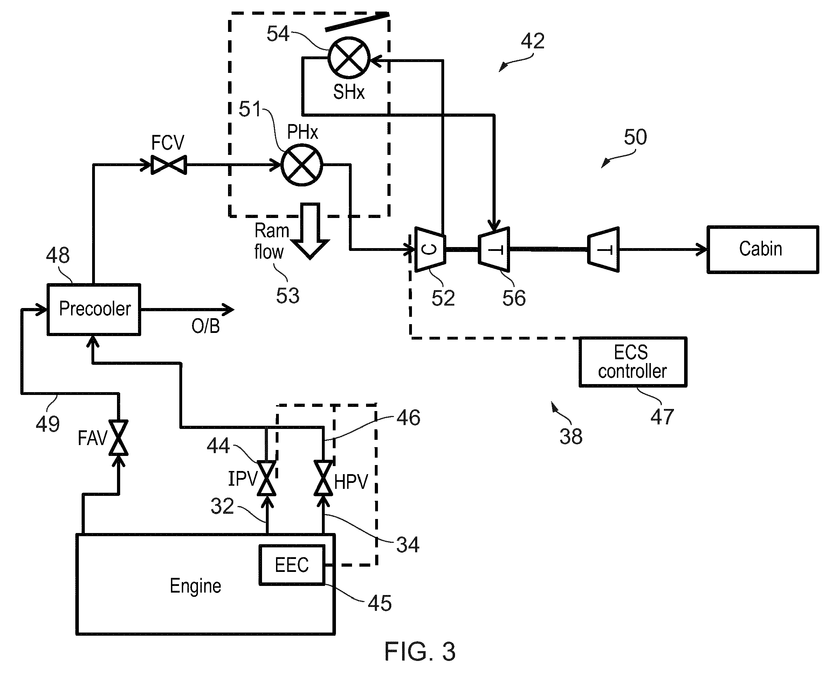

In the example shown in Fig. 3, the BAS comprises a low pressure bleed port 32 and a high pressure bleed port 34. It is generally desirable to extract bleed air from the low pressure bleed port 32 (i.e. one near the front of the engine), since air taken from the low pressure bleed port 32 has been compressed to a lesser extent compared to air taken from the high pressure bleed port 34. Consequently, a given mass of air bled from the low pressure bleed port 32 represents a smaller energy loss to the thermodynamic cycle of the engine 10 compared to the same mass of air taken from the high pressure bleed port 34, and so the specific fuel consumption (SFC) of the engine 10 will be greater (i.e. more fuel will be burned for a given thrust) where air is bled from the high pressure bleed port 34.

Fig. 3 shows part of a prior pneumatic system 38 for the aircraft 100. The system 38 comprises an ECS system 42, which is supplied by air from a BAS system. The BAS system supplies air to the ECS system 42 from either or both of the high and low pressure bleed ports 32, 34. Valves 44, 46 are provided, which determine which bleed ports 32, 34 supply air to the ECS 42. Bleed air from the ports 32, 34 is first cooled in a pre-cooler heat exchanger 48 with fan air supplied via a duct 49, then cooled further to a lower temperature in a first ram air heat exchanger 51 by air from a ram air duct 53. The air is then transferred to an air cycle machine 50, which cools the air to a required temperature for delivery to the cabin. In some cases, several air cycle machines are provided in series. The air cycle machine 50 comprises a compressor 52, and a turbine 56. Located between the compressor 52 and turbine 54 is a second ram air heat exchanger 54. Air passes through the compressor 52 where it is compressed and thereby heated. The compressed air is then cooled to a lower temperature in the heat exchanger 54 by ram air, before being cooled to a still lower temperature by the turbine 56, which drives the compressor 52 via an interconnecting shaft. The cooled air is then passed to the cabin.

The valves 44, 46 are controlled by an EEC controller 45, or a local bleed air system controller which operates according to a predetermined schedule on the basis of one or more of engine pressure, compressor corrected rotational speed, bleed demand (such as wing de-icing requirements) and aircraft altitude in order to provide a predetermined pressure to operate the ECS system 42. In some cases, the ECS system 42 may also operate in different operating modes, for example a first mode in which one air cycle machine is used and another bypassed, and a second mode in which two air cycle machines are used, as controlled by the ECS controller 47. The pre-cooler heat exchanger 48 may also be bypassed or a cooling flow to the heat exchanger 48 reduced in some operating modes. In general, at low engine thrust, and therefore low engine overall pressure, air is supplied to the ECS system 42 from the high pressure bleed port 34, whereas at high engine thrust, and therefore high engine overall pressure, air is supplied to the ECS system 42 from the low pressure bleed port 32. However, existing bleed air systems and methods for control which rely on engine compressor pressure or corrected compressor rotational speed and / or altitude may in some cases provide bleed from a higher pressure compressor stage than is necessary to fulfil the requirements of the ECS system in the mode in which it is operating, resulting in increased SFC (i.e. excessive fuel burn). This is because the controller assumes an ECS system operating mode which requires the highest operating pressure, and so is scheduled to provide a pressure capable of operating for this assumed pressure requirement.

EP 2492199 describes a further ECS system. A precooler for cooling compressor bleed air for an ECS includes a heat exchanger in fluid communication with a source of cooling air an operable for cooling the bleed air. A variable bypass valve between a bleed air source and the ECS is operable for bypassing at least a portion of the compressor bleed air around the heat exchanger. The cooling air may be a portion of fan air modulated by a variable fan air valve. The bleed air source may be selectable between the low pressure bleed air source and a high pressure bleed air source. One method includes flowing the compressor bleed air from a single low pressure source only and increasing thrust sufficiently to meet a minimum level of pressure of the bleed air during one engine out aircraft operation condition during approach or loitering.

The present invention describes an aircraft pneumatic system and a method of controlling an aircraft pneumatic system which seeks to overcome some or all of the above problems.

### Summary of the Invention

According to a first aspect of the present invention, there is provided a method of operating a pneumatic system of an aircraft, the aircraft having a gas turbine engine, the aircraft pneumatic system comprising:
an environmental control system configured to provide cabin air flow to the aircraft, the environmental control system having a plurality of operating modes; and
a bleed air system configured to provide pressurised air to the environmental control system, the bleed air system having a plurality of bleed ports, each bleed port being in fluid communication with a different pressure stage of a compressor of the gas turbine engine;
wherein the method comprises:
determining one or more pneumatic system conditions
determining one or more environmental control system operating modes capable of providing an environmental control system operating requirement;
determining which bleed ports or combination of bleed ports are capable of operating each environmental control system operating mode at the determined pneumatic system conditions; and
selecting the combination of determined environmental control system operating modes and determined bleed ports or combination of bleed ports which require operation of the lowest pressure bleed port or combination of bleed ports.

According to a second aspect of the present invention, there is provided a pneumatic system for an aircraft having a gas turbine engine, the pneumatic system comprising:
an environmental control system configured to provide cabin airflow to the aircraft, the environmental control system having a plurality of operating modes;
a bleed air system configured to provide pressurised air to the environmental control system, the bleed air system having a plurality of bleed ports, each bleed port being in fluid communication with a different pressure stage of a compressor of the gas turbine engine;
a sensor arrangement configured to sense one or more pneumatic system conditions; and
a control system configured to:
   determine one or more environmental control system operating modes capable of providing a an environmental control system operating requirement;
   determine which bleed port or combination of bleed ports are capable of operating each environmental control system operating mode at the determined pneumatic system conditions; and
   select the combination of determined environmental control system operating modes and determined bleed port or combination of bleed ports which require operation of the lowest pressure bleed port or combination of bleed ports.

According to a third aspect of the invention, there is provided an aircraft comprising a pneumatic system according to the first or second aspects of the invention.

Accordingly, the invention provides a control method and a pneumatic system in which the environmental control system (ECS) is operated in an operating mode which requires operation of a lower pressure bleed port or combination of bleed ports during some pneumatic system conditions. In order to accommodate the variable operating modes of the ECS, each of which has a corresponding pressure requirement, the system is configured to provide the necessary pressure from the lowest pressure bleed port. Both the bleed air system (BAS) and the ECS are therefore configured to operate with one another, by choosing an ECS operating mode requiring a minimum pressure, and matching delivery pressure provided by the BAS with the operating pressure required by the selected operating mode of the ECS, rather than operating these two systems independently. Consequently, the ECS and BAS are optimised with respect to one another for the current pneumatic system conditions, thereby providing improved operability of the aircraft pneumatic system, and gas turbine engine. In other words, the pressure requirement of the ECS is allowed to vary by operating the ECS in different operating modes in accordance with current pneumatic system conditions, and the controller adjusts the delivered air pressure accordingly by the most efficient method, by providing the bleed air from the lowest pressure port capable of providing the required pressure. Consequently, in some flight conditions, a lower pressure bleed port can be used than would normally be scheduled in the case of the prior art operating methods and systems, resulting in reduced engine pressure loss, and therefore reduced Specific Fuel Consumption (SFC). In one scenario, it has been found that the invention can reduce SFC by up to 1% over a typical flight cycle, and up to 4% in some parts of the flight cycle, resulting in considerable fuel saving to the aircraft operators, and reduced environmental impact.

The bleed air system may comprise first, second and third bleed ports, each bleed port being in fluid communication with a respective first, second and third pressure stage of the compressor of the gas turbine engine.

The control system may comprise a bleed air system controller and may comprise an environmental system controller.

In a first embodiment, the bleed air system controller may be configured to model the environmental control system, instruct the environmental control system controller to select an environmental control system operating mode which is capable of providing a required environmental control system operating requirement using the lowest operating pressure, and select the lowest pressure bleed port or combination of bleed ports capable of providing that pressure.

In a second embodiment, the environmental control system may comprise an environmental control system controller configured to select an environmental control system operating mode which is capable of providing an environmental control system operating requirement using the lowest operating pressure, and provide a signal to the bleed air system controller, and the bleed air system controller may be configured to select the lowest pressure bleed port or combination of bleed ports capable of providing that pressure.

The ECS may comprise one or more air cycle machines configured to cool bleed air flowing therethrough, each air cycle machine comprising a compressor, and at least one turbine. The ECS may comprise a second ram heat exchanger configured to cool air flowing between the compressor and the turbine of the air cycle machine. In one embodiment, the air cycle machine may comprise a high pressure turbine and a low pressure turbine, and one or both of the turbines may be configured to drive the compressor. The air cycle machine may further comprise a fan driven by the turbine. The pneumatic system may further comprise one or more pre-coolers comprising a heat exchanger configured to exchange heat between the bleed air and cooling air before the bleed air is passed to the ECS. The cooling air of the pre-cooler may comprise fan air from the gas turbine engine. The ECS may comprise a first ram air heat exchanger configured to exchange heat between bleed air and cooling air before the bleed air is passed to the air cycle machine. The cooling air of the first ram air heat exchanger may comprise ram air.

The pre-cooler may comprise a valve configured to moderate cooling of the bleed air by the cooling air. The pre-cooler may comprise a pre-cooler bypass configured to bypass bleed air around the pre-cooler, and the valve may be configured to moderate the relative amounts of air flowing through the pre-cooler and through the pre-cooler bypass. The pre-cooler may further comprise a cooling air flow valve configured to moderate a rate of cooling air flow through the pre-cooler heat exchanger.

The ECS or each air cycle machine may comprise a valve configured to moderate cooling of the bleed air by the air cycle machine. The ECS may include an air cycle machine bypass configured to bypass bleed air around the air cycle machine or parts of the air cycle machine such as a turbine of the air cycle machine. The valve may be configured to moderate the relative amounts of air flowing through the air cycle machine and through the air cycle machine bypass.

The ECS operating modes may comprise a plurality of air cycle machine operating modes, a plurality of air cycle machine turbine operating modes, a plurality of pre-cooler operating modes,.

The plurality of air cycle machine operating modes may comprise a first operating mode, in which the valve is operated to cool the bleed air to a first extent, and a second operating mode in which the valve is operated to cool the bleed air to a greater extent than the first extent.

The plurality of air cycle machine turbine operating modes may comprise a first operating mode in which the valve is operated to cool the bleed air to a first extent, and a second operating mode in which the valve is operated to cool the bleed air to a greater extent than the first extent.

The plurality of pre-cooler operating modes may comprise a first operating mode, in which the valve is operated to cool the bleed air to a relatively low extent (or no extent), and a second operating mode in which the valve is operated to cool the bleed air to a relatively higher extent.

Consequently, the ECS is operable in at least two operating modes, i.e. first and second operating modes of the air cycle machine. Where the ECS comprises an air cycle machine having two turbines and a precooler having a bypass, the ECS will be operable in six independent operating modes. The ECS may be operable in further operating modes. For example, the respective valves may be modulated such that the amount of air passed through the bypass is substantially continuously variable.

Each ECS operating mode may have a corresponding operating pressure for given ECS conditions, e.g. the pressure required at the inlet of the ECS to provide the required flow rate and temperature at an outlet of the ECS where the air cycle machine is in the first operating mode, i.e. where the air cycle machine is bypassed, is lower than when the air cycle machine is in the second operating mode, i.e. where the bleed air is passed through the air cycle machine.

The pneumatic system conditions may comprise one or more aircraft conditions, environmental conditions, gas turbine engine conditions, and environmental control system conditions.

The determined aircraft conditions may comprise one or more of aircraft altitude, aircraft airspeed, and anti-icing system state.

The environmental conditions may comprise one or more of ambient air temperature and ambient air pressure.

The gas turbine engine conditions may comprise one or more of a gas turbine engine availability, a gas turbine engine pressure such as compressor exit pressure (P30), a gas turbine gas flow temperature such as compressor outlet temperature (T30), a gas turbine engine shaft rotational speed or corrected rotational speed.

The environmental control system conditions may comprise one or more of an environmental control system component availability. The environmental control system operating requirement may comprise one or more of a cabin airflow rate requirement, a cabin airflow temperature requirement, and a cabin airflow pressure requirement.

The controller may comprise one or more look-up tables or algorithms comprising corresponding specific fuel consumption values or pressure requirements for each ECS operating mode, and may comprise one or more look-up tables or algorithms comprising corresponding gas turbine engine conditions and bleed port pressures.

### Brief Description of the Drawings

Fig. 1 shows a gas turbine engine;
Fig. 2 shows an aircraft incorporating a bleed air system in accordance with the present invention;
Fig. 3 shows a diagrammatic representation of a prior bleed air system;
Fig. 4 shows a diagrammatic representation of a bleed air system in accordance with the present invention;
Fig. 5 shows a plurality of operating modes of the bleed air system of Fig. 4; and
Fig. 6 shows an example bleed air system schedule for the bleed air system of Fig. 4 during a typical flight cycle;

### Detailed Description

Figure 2 shows an aircraft 100 having a pair of gas turbine engines 10 (shown in detail in Fig. 1) and an aircraft pneumatic system 110. The gas turbine engines 10 are conventional in configuration, comprising, in axial flow series, an air intake duct 11, an intake fan 12, a bypass duct 13, an intermediate pressure compressor 14, a high pressure compressor 16, a combustor 18, a high pressure turbine 20, an intermediate pressure turbine 22, a low pressure turbine 24 and an exhaust nozzle 25. Each compressor 14, 16 comprises a series of axial or centrifugal compressors, having multiple stages arranged in series, each stage pressurising air passing therethrough to a higher pressure than the previous stage.

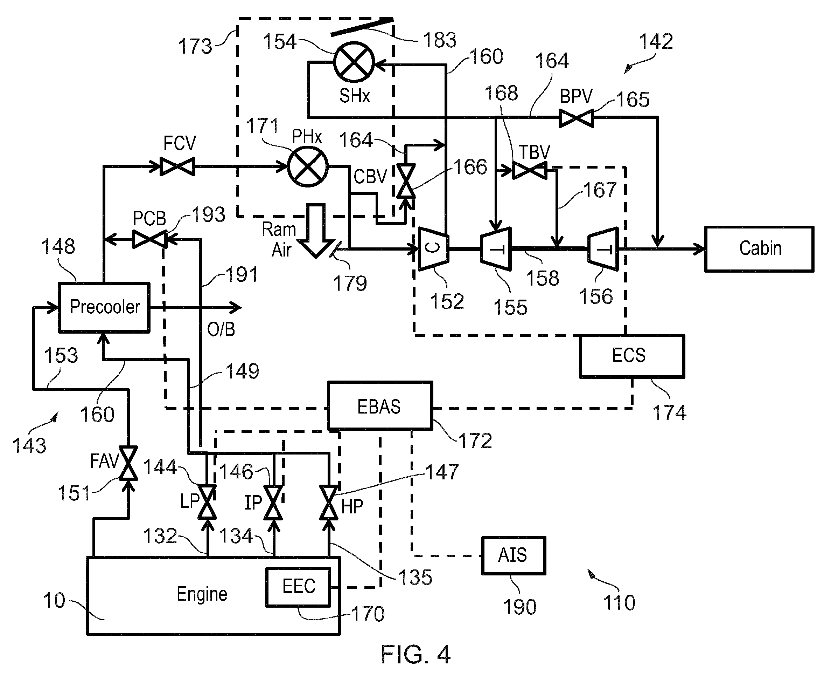

Fig. 4 shows the pneumatic system 110 in more detail. The system 110 comprises an ECS 142 which is supplied by air from a bleed air system 143. The bleed air system 143 comprises first, second and third bleed ports 132, 134, 135. Each bleed port is in fluid communication with a respective compressor stage of the main gas turbine engine. For example, the first bleed port 132 may be in fluid communication with a relatively low pressure compressor stage of the intermediate stage compressor 14 near the front of the engine, the second bleed port 134 may be in fluid communication with an intermediate pressure stage of the compressor, such as a stage of the intermediate pressure compressor 14 towards the rear of the intermediate compressor 14, and the third bleed port 135 with a relatively high pressure stage of the compressor, such as a stage of the high pressure compressor 16. The bleed ports 132, 134, 135 lead into an ECS inlet comprising a common bleed air manifold 149, which in turn leads to a bleed air duct 160. Bleed valves 144, 146, 147 are provided, which determine which of the bleed ports 132, 134, 135 supply air to the ECS 142. In the described embodiment, the bleed valves 144, 146, 147 are shutoff valves, i.e. are in either an open position in which air is allowed to flow, or a closed position in which air is prevented from flowing, though variable flow valves could instead be employed.

The bleed air system 143 further comprises a first pre-cooler 148 comprising a heat exchanger. The pre-cooler 148 is configured to exchange heat between relatively hot bleed air from the bleed air duct 160 and relatively cool cooling air in the form of fan air provided by a fan air duct 153. The fan air duct 153 is provided with a modulation valve 151 configured to modulate the flow of fan air through the pre-cooler 148 to control the temperature of the bleed air flowing therethrough, to thereby modulate the cooling of the bleed air provided by the pre-cooler 148.

The BAS includes an optional precooler bypass duct 191 which is configured to selectively bypass bleed air around the precooler 148. A bypass valve 193 is provided to switch air between the precooler 148 and bypass duct, to thereby control the amount of cooling provided by the precooler 148.

The ECS 142 further comprises a first ram air heat exchanger 171. The first ram air heat exchanger 171 is configured to exchange heat between the bleed air in the duct 160 downstream of the pre-cooler 148, and ram air provided in a ram air duct 173, which provides air at ambient temperature from outside the aircraft. The amount of cooling air flowing through the ram air duct 173 can be controlled by a valve in the form of a ram air duct door 183, thereby controlling the cooling of the air passing through the heat exchanger 171.

Downstream of the first ram air heat exchanger 171 is an air cycle machine 150. The air cycle machine comprises a compressor 152, high pressure and low pressure turbines 155, 156. The ECS 142 also comprises a second ram air heat exchanger 154 located between the compressor 152 and high pressure turbine 155.

The compressor 152 comprises a conventional centrifugal compressor configured to raise the pressure of bleed air passing therethrough from the bleed air duct 160. A water extraction loop may also be provided to remove water from the air in the bled duct 160. The second ram air heat exchanger 154 is also conventional in configuration, and comprises a plurality of tubes (not shown) carrying bleed air from the bleed air duct 160. The tubes carrying bleed air are surrounding by tubes carrying ram duct air supplied from the ram duct 173. The high and low pressure turbines 155, 156 are also conventional in configuration, comprising turbine wheels through which bleed air from the bleed air duct 160 can pass in series, thereby driving the turbines. The compressor 152 and turbines 155, 156 are interconnected by a shaft 158 which drives the compressor 152 using power generated by the turbines 155, 156. The shaft 158 also drives a fan 179, which drives air through the ram air duct 173. The bleed air duct 160 extends through the compressor 152, heat exchanger 154 and turbines 155, 156, and is thus compressed (and thereby heated) when it passes through the compressor 152, cooled by ram air in the heat exchanger 154, and further cooled by the high and low pressure turbines 155, 156. The ECS 142 further comprises an outlet 143 which provides cooled bleed air to the aircraft cabin.

The ECS 142 includes an air cycle machine bypass duct 164. The duct 164 comprises an inlet in fluid communication with the bleed air duct 160 upstream of the air cycle machine 150, and an outlet downstream of the air cycle machine 150. The inlet comprises a compressor bypass valve 166, which allows selectively bypassing the air cycle machine compressor. The bypass duct 164 further comprises a turbine bypass valve 165 downstream of the second ram air heat exchanger 154. The turbine and compressor bypass valves 166 and 165 are operable in a first operating condition, in which bleed air is directed through the bypass duct 164 and prevented from flowing through the air cycle machine 150, and a second operating condition, in which bleed air is prevented from flowing through the bypass duct 164 and directed to the air cycle machine 150, thereby controlling the amount of cooling provided by the air cycle machine 150. The compressor and turbine bypass valves are operated in the first operating condition by opening the bypass valve 166 and 165. On the other hand, when the valves 166 and 165 are closed, air is forced through the air cycle machine 150.

The air cycle machine 150 further comprises a high pressure turbine bypass duct 167. The duct 167 comprises an inlet in fluid communication with an inlet of the high pressure turbine 155, and an outlet downstream of the high pressure turbine 155. The duct 167 comprises a turbine bypass valve 168, which is operable in a first operating condition, in which bleed air is directed through the bypass duct 167 and prevented from flowing through high pressure turbine 155, and a second operating condition, in which bleed air is prevented from flowing through the bypass duct 166 and directed to the high pressure turbine 155, to thereby control the amount of cooling provided by the high pressure turbine 155.

The bleed air system 110 further comprises a control system comprising an engine electronic controller (EEC) 170, a bleed air system controller (BAS controller) 172, and an environmental system controller (ECS controller) 174. In the described embodiment, the EEC 170, BAS controller 172 and ECS controller 174 comprise separate devices. However, the functions and connections of two or more of the controllers 170, 172, 174 could be combined into a single controller, or incorporated into an existing controller on the aircraft.

The EEC 170 is located on or adjacent the gas turbine engine 10, and is configured to sense one or more gas turbine engine conditions such as main engine compressor exit pressure (P30), main engine compressor exit temperature (T30) core flow rate, or correct rotational shaft speed. The EEC 170 is in signal communication with a compressor pressure sensor 176 configured to sense a compressor exit pressure (P30), and compressor exit temperature (T30) sensor 181 and a core flow sensor 178 configured to sense the flow rate of gases flowing through the engine core. This data is then sent to the BAS controller 172 through a link 180. Further sensors could also be included for measuring further gas turbine engine conditions.

The BAS controller 172 receives engine condition data from the EEC, including the compressor exit pressure (P30) and core flow rate. The BAS controller 172 also receives aircraft data from an aircraft information system controller (AIS) 190 which provides data regarding a required ECS system condition, such as one or more of a required cabin air flow, pressure and temperature. The aircraft information system controller 190 may also provide further aircraft conditions such as aircraft altitude as determined by an altitude sensor, aircraft speed as determined by a pitot tube, ambient air temperature as determined by a temperature sensor, air cycle machine availability (i.e. an indication of whether one or more air cycle machine has failed) as determined by an air cycle machine availability sensor, gas turbine engine availability (i.e. an indication of whether one or more main gas turbine engines has failed) as determined by a gas turbine engine availability sensor, and an anti-icing system state as determined by an anti-icing system state sensor.

The BAS controller 172 is in signal communication with each of the bleed valves 144, 146, 147. The BAS controller is configured to send a signal to each of the bleed valves 144, 146, 147 to move the valves between open and closed positions, and so select a bleed flow from one of the compressor stages. The BAS controller 172 is also in signal communication with the fan air duct modulation valve 151. The BAS controller 172 is configured to send a signal to the valve 151 to move the valve between open and closed positions, and perhaps intermediate positions, and so select a cold fan flow rate through the pre-cooler 148 to control the temperature of the air exiting the pre-cooler 148.

The BAS controller 172 is also in signal communication with the precooler bypass valve 193. The BAS controller 172 is configured to send a signal to the precooler bypass valve 193 to move the valve between open and closed positions, and perhaps intermediate positions, and so select a bleed flow rate through the precooler 148 to control the temperature and pressure of the air entering the ECS 142.

The BAS controller 172 is also in signal communication with the ECS controller 174 through a link 182. The ECS controller 174 is in signal communication with the bypass valves 165, 168, and is configured to send a signal to each of the bypass valves 165, 168 to move the valves between first and second positions, and so select a respective operating mode of the ECS 142.

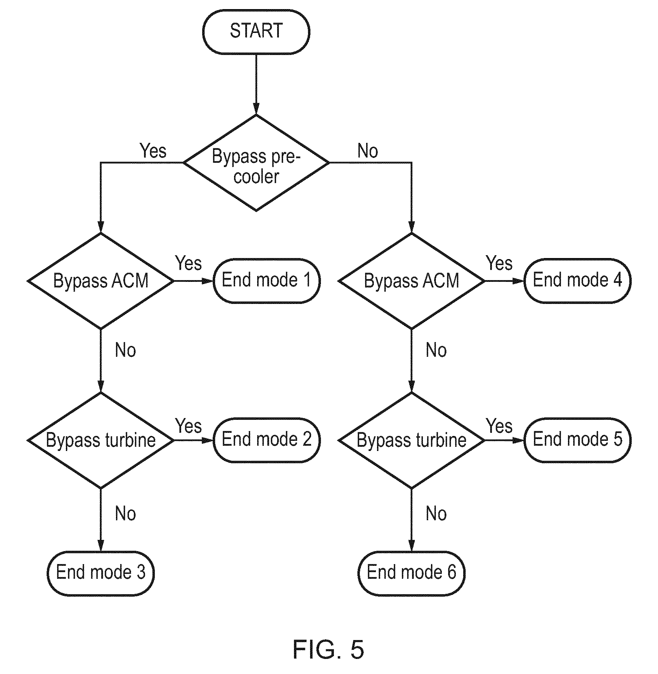

Fig. 5 shows some of the potential operating modes of the ECS 142. In this example, six operating modes are possible. The BAS controller 172 includes a look-up table which determines which ECS operating modes are capable of providing the required ECS conditions, and of these, which ECS operating mode is optimal (i.e. requires the lowest pressure) based on the determined ECS, aircraft and engine conditions, such as engine compressor pressure (P30), compressor inlet temperature, altitude, airspeed and failure states, as determined by the EEC 170. The BAS controller 172 then determines a BAS operating mode (i.e. a bleed port or combination of bleed ports 132, 133, 135) capable of providing the required ECS operating pressure. Alternatively, the ECS 142 may include a look-up table, select an operating mode requiring the lowest pressure, and instruct the BAS controller 170 to operate the bleed valves 144, 146, 147 to provide the pressure from the lowest pressure port 132, 134, 135 capable of providing that pressure.

For example, bypassing the air cycle machine 150 will result in a smaller pressure loss across the system, thereby resulting in a lower pressure requirement from the bleed ports 132, 134, 135 for a given ECS delivery temperature and flow requirement, and so the optimal ECS operating mode may be one in which the air cycle machine 150 is bypassed. However, at some bleed air system conditions, bypassing the air cycle machine 150 may not provide the required cabin air flow, pressure and temperature, and so the ECS operating mode must be altered throughout the flight cycle to provide the required temperature and flow rate. For example, at low altitude and low engine thrust, both turbines 155, 156 of the air cycle machine 150 may be required to provide the required cabin air flow rate and temperature.

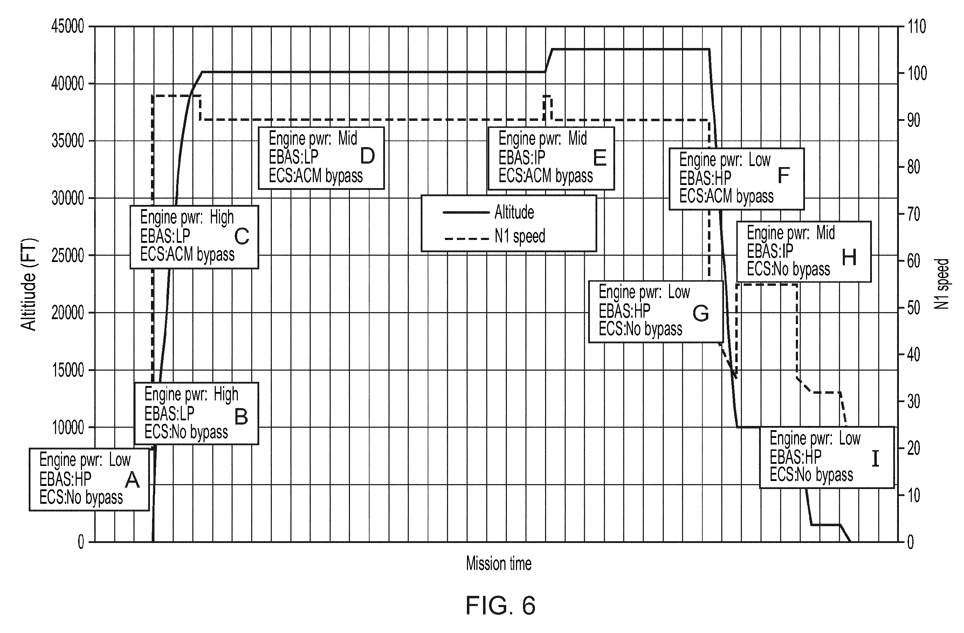

Fig. 6 gives an example operation of the ECS system by the controllers 170, 172, 174. At point A, at engine idle and low altitude, the ECS controller 174 or BAS controller 172 selects an appropriate ECS operating mode to provide the required cabin air flow rate and temperature on the basis of the sensed aircraft and engine conditions, which in the described example comprises operating mode 6 (i.e. no pre-cooler or air cycle machine by-pass). The BAS controller 172 determines a bleed port capable of providing the required pressure at the sensed engine conditions, which in this example will be the third bleed port 135, as the compressor pressure P30 as sensed by the sensor 176 is relatively low.

At point B, with the engine at maximum take-off power, and the aircraft still at low altitude, the ECS controller 172 still selects mode 6, in accordance with aircraft conditions. However, the compressor pressure P30 is increased at high power settings. This is sensed by the sensor 135, and the low pressure bleed port 132 is selected by the BAS controller 172, as this low pressure bleed port 132 is now capable of providing the required temperature, flow rate and pressure at the determined engine conditions.

At point C, the aircraft is climbing, with the altitude increasing, and the engine is at climb power. At some point (as determined by the outside air temperature), a temperature threshold is breached, and the ECS 142 is switched to mode 4 (i.e. the air cycle machine 150 is bypassed). This new ECS state is communicated to the BAS controller 170, which determines that the required pressure and temperature can be provided by the first bleed port 132.

At point D, the aircraft has reached cruise altitude, and power is reduced. The ECS 142 remains in mode 4. The first bleed port 132 is still used, since the pressure requirement for the ECS 142 is still relatively low.

At point E, the aircraft is at very high altitude (say, above 40,000 feet), and the ECS 142 switches to mode 6. In addition, the BAS controller 174 determines that at this altitude, the required flow, temperature and pressure cannot be obtained from the first bleed port 132 at the sensed engine conditions, and so a signal is sent to close the first bleed port 132, and open the second bleed port 134.

At point F, engine power is reduced, and the aircraft begins its descent. The ECS remains in mode 4. However, at the reduced thrust settings, the BAS controller 174 determines that the required temperature and pressure cannot be obtained from the second bleed port, and so a signal is sent to close the second bleed port 134, and open the third bleed port 135.

At point G, the aircraft continues its descent to a lower altitude. The increase in outside temperature is sensed, and the ECS 142 switches to mode 6 (i.e. the air cycle machine 150 is no longer bypassed). The third bleed port 135 remains open.

At point H, the aircraft is in "hold", i.e. the aircraft is maintained at a low altitude, and the engine throttle is increased. The ECS remains in mode 6, while the BAS switches from the third bleed port 135 to either the first or second bleed port 132, 134 depending on sensed engine conditions.

At point I, the aircraft is again at low altitude, with the engine at low power, and the system is operated in a similar manner as at point A.

Accordingly, the invention provides an aircraft pneumatic system that provides a required cabin air flow, pressure and temperature while minimising gas turbine specific fuel consumption.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A method of operating a pneumatic system (110) of an aircraft (100), the aircraft (100) having a gas turbine engine (10), the aircraft pneumatic system (110) comprising:
an environmental control system (142) configured to provide cabin air flow to the aircraft (100), the environmental control system (142) having a plurality of operating modes; and
a bleed air system (143) configured to provide pressurised air to the environmental control system (142), the bleed air system (143) having a plurality of bleed ports (132, 134, 135), each bleed port (132, 134, 135) being in fluid communication with a different pressure stage of a compressor (14, 16) of the gas turbine engine (10);
the method being **characterized by**:
determining one or more pneumatic system conditions;
determining one or more environmental control system operating modes capable of providing a required environmental control system operating requirement;
determining which bleed ports (132, 134, 145) or combination of bleed ports (132, 134, 135) are capable of operating each environmental control system operating mode at the sensed pneumatic system conditions; and
selecting a combination of determined environmental control system operating modes and determined bleed ports (132, 134, 135) or combination of bleed ports (132, 134, 135) which require operation of the lowest pressure bleed port or combination of bleed ports

2. A method according to claim 1, wherein the bleed air system (143) comprises first, second and third bleed ports (132, 134, 135), each bleed port (132, 134, 135) being in fluid communication with a respective first, second and third pressure stage of the compressor (14, 16) of the gas turbine engine (10).

3. A method according to claim 1 or claim 2, wherein the environmental control system (142) comprises one or more ram air heat exchangers (171), and one or more air cycle machines (150) configured to cool bleed air flowing therethrough, each air cycle machine (150) comprising a compressor (152), and at least one turbine (155, 156), and wherein the air cycle machine (150) may comprise a high pressure turbine (155) and a low pressure turbine (156), at least one turbine (155, 156) being configured to drive the air cycle machine compressor (152).

4. A method according claim 3, wherein the pneumatic system further comprises one or more pre-coolers (148) comprising a heat exchanger configured to exchange heat between the bleed air and cooling air before the bleed air is passed to the air cycle machine (150), and wherein the or each pre-cooler (148) may comprise a valve (151) configured to moderate cooling of the bleed air by the cooling air.

5. A method according to claim 3 or claim 4, wherein each air cycle machine (150) comprises a valve (166) configured to moderate cooling of the bleed air by the air cycle machine (150).

6. A method according to claim 3 or any claim dependent thereon, wherein the environmental system operating modes comprise at least one of a plurality of air cycle machine (150) operating modes and a plurality of air cycle machine turbine (155, 156) operating modes, and wherein the plurality of air cycle machine operating modes may comprise a first operating mode, in which the air cycle machine valve (166) is operated to cool the bleed air to a first extent, and a second operating mode in which the air cycle machine valve (166) is operated to cool the bleed air to a greater extent than the first extent, and wherein the plurality of pre-cooler (148) operating modes may comprise a first operating mode, in which the precooler bypass valve (151) is operated to cool the bleed air to a first extent (or no extent), and a second operating mode in which the precooler bypass valve (151) is operated to cool the bleed air to a greater extent than the first extent.

7. A method according to any of the preceding claims, wherein the determined pneumatic system (110) conditions comprises one or more aircraft (100) conditions comprising one or more of aircraft altitude, aircraft speed and anti-icing system state, and the determined pneumatic system conditions may include one or more environmental conditions, such as external air pressure and temperature, and may comprise one or more gas turbine engine (10) conditions and one or more environmental control system (142) conditions.

8. A method according to claim 7, wherein the gas turbine engine (10) conditions comprise one or more of a gas turbine engine availability, a gas turbine engine pressure such as compressor exit pressure (P30), a gas turbine gas flow temperature such as compressor outlet temperature (T30), a gas turbine engine shaft rotational speed or corrected rotational speed.

9. A method according to any of the preceding claims, wherein the environmental control system (142) operating requirement may comprise one or more of an environmental control system component availability, a cabin airflow rate requirement, a cabin airflow temperature requirement, and a cabin airflow pressure requirement.

10. A pneumatic system (110) for an aircraft (100) having a gas turbine engine (10), the pneumatic system (110) comprising:
an environmental control system (142) configured to provide cabin airflow to the aircraft (100), the environmental control system (142) having a plurality of operating modes;
a bleed air system (143) configured to provide pressurised air to the environmental control system (142), the bleed air system (143) having a plurality of bleed ports (132, 134, 135), each bleed port (132, 134, 135) being in fluid communication with a different pressure stage of a compressor (14, 16) of the gas turbine engine (10);
a sensor (176, 181, 178) arrangement configured to sense one or more pneumatic system conditions; **characterized by** a control system (170, 172, 174) configured to:
determine one or more environmental control system operating modes capable of providing an environmental control system operating requirement;
determine which bleed port (132, 134, 135) or combination of bleed ports (132, 134, 135) are capable of operating each environmental control system operating mode at the determined pneumatic system conditions; and
select the combination of determined environmental control system operating modes and determined bleed port (132, 134, 135) or combination of bleed ports (132, 134, 135) which require operation of the lowest pressure bleed port or combination of bleed ports

11. A system according to claim 10, wherein the control system (170, 172, 174) comprises a bleed air system controller (172) and an environmental system controller (174).

12. A system according to claim 10 or claim 11, wherein the bleed air system controller (172) is configured to model the environmental control system (142), instruct the environmental control system controller (174) to select an environmental control system operating mode which is capable of providing an environmental control system operating requirement using the lowest operating pressure, and select the lowest pressure bleed port (132, 134, 135) or combination of bleed ports (132, 134, 135) capable of providing that pressure.

13. A system according to claim 10 or claim 11, wherein the environmental control system controller (174) is configured to select an environmental control system operating mode which is capable of providing an environmental control system operating requirement using the lowest operating pressure, and the bleed air system controller (172) is configured to select the lowest pressure bleed port (132, 134, 135) or combination of bleed ports (132, 134, 135) capable of providing that pressure.

14. A system according to any of claims 10 to 13, wherein the control system (170, 172, 174) comprises one or more look-up tables or algorithms comprising corresponding specific fuel consumption values or pressure requirements for each bleed air system (143) condition and environmental control system (142) operating mode.

15. A system according to any of claims 10 to 14, wherein the control system (170, 172, 174) comprises one or more look-up tables or algorithms comprising corresponding gas turbine engine (10) conditions and bleed port (132, 134, 135) pressures.

## Patentansprüche

1. Verfahren für den Betrieb eines pneumatischen Systems (110) eines Luftfahrzeugs (100), wobei das Luftfahrzeug (100) einen Gasturbinenmotor (10) aufweist, wobei das pneumatische System (110) eines Luftfahrzeugs folgendes umfasst:
ein Umgebungskontrollsystem (142), das so gestaltet ist, dass es dem Luftfahrzeug (100) eine Kabinenluftströmung bereitstellt, wobei das Umgebungskontrollsystem (142) mehrere Betriebsmodi aufweist; und
ein Zapfluftsystem (143), das so gestaltet ist, dass es dem Umgebungskontrollsystem (142) Druckluft bereitstellt, wobei das Zapfluftsystem (143) mehrere Auslassanschlüsse (132, 134, 135) aufweist, wobei jeder Auslassanschluss (132, 134, 135) sich in Fluidkommunikation mit einer anderen Druckstufe eines Kompressors (14, 16) des Gasturbinenmotors (10) befindet;
wobei das Verfahren **gekennzeichnet ist durch**:
Bestimmen eines oder mehrerer Bedingungen des pneumatischen Systems;
Bestimmen eines oder mehrerer Betriebsmodi des Umgebungskontrollsystems, die eine erforderliche Betriebsvoraussetzung des Umgebungskontrollsystems bereitstellen können;
Bestimmen, welche Auslassanschlüsse (132, 134, 135) oder welche Kombination von Auslassanschlüssen (132, 134, 135) in der Lage sind bzw. ist, jeden Betriebsmodus des Umgebungskontrollsystems bei den erfassten Bedingungen des pneumatischen Systems zu betreiben; und
Auswählen einer Kombination bestimmter Betriebsmodi des Umgebungskontrollsystems und bestimmter Auslassanschlüsse (132, 134, 135) oder einer Kombination von Auslassanschlüssen (132, 134, 135), die den Betrieb des Auslassanschlusses oder der Kombination von Auslassanschlüssen mit dem niedrigsten Druck erfordern.

2. Verfahren nach Anspruch 1, wobei das Zapfluftsystem (143) erste, zweite und dritte Auslassanschlüsse (132, 134, 135) umfasst, wobei sich jeder Auslassanschluss (132, 134, 135) in Fluidkommunikation mit einer entsprechenden ersten, zweiten und dritten Druckstufe des Kompressors (14, 16) des Gasturbinenmotors (10) befindet.

3. Verfahren nach Anspruch 1 oder 2, wobei das Umgebungskontrollsystem (142) einen oder mehrere Stauluftwärmetauscher (171) und eine oder mehrere Luftkreislaufmaschinen (150) umfasst, die so gestaltet sind, dass sie dort hindurch strömende Zapfluft kühlen, wobei jede Luftkreislaufmaschine (150) einen Kompressor (152) und wenigstens eine Turbine (155, 156) umfasst, und wobei die Luftkreislaufmaschine (150) eine Hochdruckturbine (155) und eine Niederdruckturbine (156) umfassen kann, wobei wenigstens eine Turbine (155, 156) so gestaltet sein kann, dass sie den Luftkreislaufmaschinenkompressor (152) antreibt.

4. Verfahren nach Anspruch 3, wobei das pneumatische System ferner einen oder mehrere Vorkühler (148) umfasst, die einen Wärmetauscher umfassen, der so gestaltet ist, dass er die Wärme zwischen der Zapfluft und der Kühlluft tauscht, bevor die Zapfluft zu der Luftkreislaufmaschine (150) geleitet wird, und wobei der oder jeder Vorkühler (148) ein Ventil (151) umfassen kann, das so gestaltet ist, dass es die Kühlung der Zapfluft durch die Kühlluft mäßigt.

5. Verfahren nach Anspruch 3 oder 4, wobei jede Luftkreislaufmaschine (150) ein Ventil (166) umfasst, das so gestaltet ist, dass es die Kühlung der Zapfluft durch die Luftkreislaufmaschine (150) mäßigt.

6. Verfahren nach Anspruch 3 oder jedem davon abhängigen Anspruch, wobei die Betriebsmodi des Umgebungskontrollsystems wenigstens einen einer Mehrzahl von Betriebsmodi einer Luftkreislaufmaschine (150) und einer Mehrzahl von Betriebsmodi einer Luftkreislaufmaschinenturbine (155, 156) umfassen, und wobei die Mehrzahl von Betriebsmodi einer Luftkreislaufmaschinenturbine einen ersten Betriebsmodus umfasst, in dem das Luftkreislaufmaschinenventil (166) so betrieben wird, dass die Zapfluft in einem ersten Ausmaß gekühlt wird, und einen zweiten Betriebsmodus, in dem das Luftkreislaufmaschinenventil (166) so betrieben wird, dass die Zapfluft stärker als in dem ersten Ausmaß gekühlt wird, und wobei die Mehrzahl der Betriebsmodi des Vorkühlers (148) einen ersten Betriebsmodus umfassen können, in dem das Vorkühler-Umgehungsventil (151) so betrieben wird, dass es die Zapfluft in einem ersten Ausmaß (oder gar nicht) kühlt, und einen zweiten Betriebsmodus, in dem das Vorkühler-Umgehungsventil (151) so betrieben wird, dass die Zapfluft stärker gekühlt wird als in dem ersten Ausmaß.

7. Verfahren nach einem der vorstehenden Ansprüche, wobei die bestimmten Bedingungen des pneumatischen Systems (110) eine oder mehrere Bedingungen des Luftfahrzeugs (100) umfassen, umfassend einen oder mehrere aus Höhe des Luftfahrzeugs, Geschwindigkeit des Luftfahrzeugs und Zustand des Eisverhütungssystems, und wobei die Bedingungen des pneumatischen Systems eine oder mehrere Umgebungsbedingungen aufweisen können, wie etwa externer Luftdruck und Außentemperatur, und wobei sie eine oder mehrere Bedingungen des Gasturbinenmotors (10) oder des Umgebungskontrollsystems (142) umfassen können.

8. Verfahren nach Anspruch 7, wobei die Bedingungen des Gasturbinenmotors (10) einen oder mehrere der folgenden umfassen: Verfügbarkeit des Gasturbinenmotors, Druck des Gasturbinenmotors, wie etwa Kompressorauslassdruck (P30), eine Gasturbinen-Gasströmungstemperatur, wie etwa die Kompressorauslasstemperatur (T30), eine Drehzahl einer Gasturbinenmotorwelle oder eine berichtigte Drehzahl.

9. Verfahren nach einem der vorstehenden Ansprüche, wobei die Betriebsvoraussetzungen des Umgebungskontrollsystems (142) einen oder mehrere der folgenden umfassen können: Verfügbarkeit einer Komponente des Umgebungskontrollsystems, eine Voraussetzung für eine Kabinenluftströmungsgeschwindigkeit, eine Voraussetzung für eine Kabinenluftströmungstemperatur und eine Voraussetzung für einen Kabinenluftströmungsdruck.

10. Pneumatisches System (110) für ein Luftfahrzeug (100) mit einem Gasturbinenmotor (10), wobei das pneumatische System (110) folgendes umfasst:
ein Umgebungskontrollsystem (142), das so gestaltet ist, dass es dem Luftfahrzeug (100) eine Kabinenluftströmung bereitstellt, wobei das Umgebungskontrollsystem (142) mehrere Betriebsmodi aufweist;
ein Zapfluftsystem (143), das so gestaltet ist, dass es dem Umgebungskontrollsystem (142) Druckluft bereitstellt, wobei das Zapfluftsystem (143) mehrere Auslassanschlüsse (132, 134, 135) aufweist, wobei jeder Auslassanschluss (132, 134, 135) sich in Fluidkommunikation mit einer anderen Druckstufe eines Kompressors (14, 16) des Gasturbinenmotors (10) befindet;
eine Sensoranordnung (176, 181, 178), die so gestaltet ist, dass sie eine oder mehrere Bedingungen des pneumatischen Systems erfasst; **gekennzeichnet durch**
ein Kontrollsystem (170, 172, 174), das so gestaltet ist, dass es folgendes ausführt:
Bestimmen eines oder mehrerer Betriebsmodi des Umgebungskontrollsystems, die eine erforderliche Betriebsvoraussetzung des Umgebungskontrollsystems bereitstellen können;
Bestimmen, welcher Auslassanschluss (132, 134, 135) oder welche Kombination von Auslassanschlüssen (132, 134, 135) in der Lage ist, jeden Betriebsmodus des Umgebungskontrollsystems bei den erfassten Bedingungen des pneumatischen Systems zu betreiben; und
Auswählen der Kombination bestimmter Betriebsmodi des Umgebungskontrollsystems und des bestimmten Auslassanschlusses (132, 134, 135) oder einer Kombination von Auslassanschlüssen (132, 134, 135), die den Betrieb des Auslassanschlusses oder der Kombination von Auslassanschlüssen mit dem niedrigsten Druck erfordert.

11. System nach Anspruch 10, wobei das Kontrollsystem (170, 172, 174) eine Zapfluftsystemsteuereinheit (172) und eine Umgebungssystemsteuereinheit (174) umfasst.

12. System nach Anspruch 10 oder 11, wobei die Zapfluftsystemsteuereinheit (172) so gestaltet ist, dass sie das Umgebungskontrollsystem (142) abbildet, die Umgebungssystemsteuereinheit (174) anweist, einen Betriebsmodus des Umgebungskontrollsystems auszuwählen, der eine Betriebsvoraussetzung des Umgebungskontrollsystems unter Verwendung des niedrigsten Betriebsdrucks bereitstellen kann, und den Auslassanschluss (132, 134, 135) oder die Kombination von Auslassanschlüssen (132, 134, 135) mit dem niedrigsten Druck auswählt, der bzw. die diesen Druck bereitstellen kann.

13. System nach Anspruch 10 oder 11, wobei die Umgebungssystemsteuereinheit (174) so gestaltet ist, dass sie einen Betriebsmodus des Umgebungskontrollsystems auswählt, der eine Betriebsvoraussetzung des Umgebungskontrollsystems unter Verwendung des niedrigsten Betriebsdrucks bereitstellen kann, und wobei die Zapfluftsystemsteuereinheit (172) so gestaltet ist, dass sie den Auslassanschluss (132, 134, 135) oder die Kombination von Auslassanschlüssen (132, 134, 135) mit dem niedrigsten Druck auswählt, der bzw. die diesen Druck bereitstellen kann.

14. System nach einem der Ansprüche 10 bis 13, wobei das Kontrollsystem (170, 172, 174) eine oder mehrere Verweistabellen oder einen oder mehrere Algorithmen umfasst, umfassend entsprechende spezifische Kraftstoffverbrauchswerte oder Druckanforderungen für jeden Zustand des Zapfluftsystems (143) und Betriebsmodus des Umgebungskontrollsystems (142).

15. System nach einem der Ansprüche 10 bis 14, wobei das Kontrollsystem (170, 172, 174) eine oder mehrere Verweistabellen oder einen oder mehrere Algorithmen umfasst, umfassend entsprechende Bedingungen des Gasturbinenmotors (10) und Druckwerte des Auslassanschlusses (132, 134, 135).

## Revendications

1. Procédé de fonctionnement d'un système pneumatique (110) d'un aéronef (100), l'aéronef (100) ayant une turbine à gaz (10), le système pneumatique (110) d'aéronef comprenant :
un système de climatisation (142) conçu pour fournir un écoulement d'air cabine à l'aéronef (100), le système de climatisation (142) ayant une pluralité de modes de fonctionnement ; et
un système d'air de purge (143) conçu pour fournir de l'air sous pression au système de climatisation (142), le système d'air de purge (143) ayant une pluralité d'orifices de purge (132, 134, 135), chaque orifice de purge (132, 134, 135) étant en communication fluidique avec un étage de pression différent d'un compresseur (14, 16) de la turbine à gaz (10) ;
le procédé étant **caractérisé par** les étapes consistant à :
déterminer une ou plusieurs conditions du système pneumatique ;
déterminer un ou plusieurs modes de fonctionnement du système de climatisation aptes à fournir une exigence de fonctionnement requise du système de climatisation ;
déterminer quels orifices de purge (132, 134, 145) ou quelle combinaison d'orifices de purge (132, 134, 135) sont aptes à actionner chaque mode de fonctionnement du système de climatisation dans les conditions du système pneumatique détectées ; et
sélectionner une combinaison de modes de fonctionnement du système de climatisation déterminés et d'orifices de purge déterminés (132, 134, 135) ou une combinaison d'orifices de purge (132, 134, 135) qui nécessitent le fonctionnement de l'orifice de purge ayant la plus basse pression ou une combinaison d'orifices de purge.

2. Procédé selon la revendication 1, le système d'air de purge (143) comprenant des premier, deuxième et troisième orifices de purge (132, 134, 135), chaque orifice de purge (132, 134, 135) étant en communication fluidique avec des premier, deuxième et troisième étages respectifs du compresseur (14, 16) de la turbine à gaz (10).

3. Procédé selon la revendication 1 ou 2, le système de climatisation (142) comprenant un ou plusieurs refroidisseurs à air dynamique (171), et un ou plusieurs groupes turbo-refroidisseurs (150) conçus pour refroidir l'air de purge passant au travers, chaque groupe turbo-refroidisseur (150) comprenant un compresseur (152), et au moins une turbine (155, 156), et le groupe turbo-refroidisseur (150) pouvant comprendre une turbine haute pression (155) et une turbine basse pression (156), au moins une turbine (155, 156) étant conçue pour entraîner le compresseur du groupe turbo-refroidisseur (152).

4. Procédé selon la revendication 3, le système pneumatique comprenant en outre un ou plusieurs pré-refroidisseurs (148) comprenant un échangeur de chaleur conçu pour échanger la chaleur entre l'air de purge et l'air de refroidissement avant que l'air de purge ne passe dans le groupe turbo-refroidisseur (150), et le ou chaque pré-refroidisseur (148) pouvant comprendre une vanne (151) conçue pour modérer le refroidissement de l'air de purge par l'air de refroidissement.

5. Procédé selon la revendication 3 ou 4, chaque groupe turbo-refroidisseur (150) comprenant une vanne (166) étant conçu pour modérer le refroidissement de l'air de purge par le groupe turbo-refroidisseur (150).

6. Procédé selon la revendication 3 ou toute revendication dépendante, les modes de fonctionnement du système de climatisation comprenant au moins l'un d'une pluralité de modes de fonctionnement du groupe turbo-refroidisseur (150) et d'une pluralité de modes de fonctionnement de la turbine de groupe turbo-refroidisseur (155, 156), et la pluralité de modes de fonctionnement du groupe turbo-refroidisseur pouvant comprendre un premier mode de fonctionnement, dans lequel la vanne de groupe turbo-refroidisseur (166) sert à refroidir l'air de purge dans une première mesure, et un second mode de fonctionnement dans lequel la vanne de groupe turbo-refroidisseur (166) sert à refroidir l'air de purge dans une plus grande mesure que la première mesure, et la pluralité de modes de fonctionnement de pré-refroidisseurs (148) pouvant comprendre un premier mode de fonctionnement, dans lequel la vanne de dérivation de pré-refroidisseur (151) sert à refroidir l'air de purge dans une première mesure (ou pas du tout), et un second mode de fonctionnement dans lequel la vanne de dérivation de pré-refroidisseur (151) sert à refroidir l'air de purge dans une plus grande mesure que la première mesure.

7. Procédé selon l'une quelconque des revendications précédentes, les conditions du système pneumatique (110) déterminées comprenant une ou plusieurs conditions d'aéronef (100) comprenant l'altitude de l'aéronef, la vitesse de l'aéronef et/ou l'état du système antigivrage, et les conditions du système pneumatique déterminées pouvant comprendre une ou plusieurs conditions environnementales, telles que la pression et a température de l'air extérieur, et pouvant comprendre une ou plusieurs conditions de la turbine à gaz (10) et une ou plusieurs conditions du système de climatisation (142).

8. Procédé selon la revendication 7, les conditions de la turbine à gaz (10) comprenant une disponibilité de la turbine à gaz, une pression de la turbine à gaz telle que la pression de sortie du compresseur (P30), une température de l'écoulement de gaz de la turbine à gaz telle que la température de sortie du compresseur (T30), et/ou une vitesse de rotation de l'arbre de turbine à gaz ou une vitesse de rotation corrigée.

9. Procédé selon l'une quelconque des revendications précédentes, l'exigence de fonctionnement du système de climatisation (142) pouvant comprendre une disponibilité de composant de système de climatisation, une exigence de débit d'air de cabine, une exigence de température d'air de cabine et/ou une exigence de pression d'air de cabine.

10. Système pneumatique (110) destiné à un aéronef (100) ayant une turbine à gaz (10), le système pneumatique (110) comprenant :
un système de climatisation (142) conçu pour fournir un écoulement d'air cabine à l'aéronef (100), le système de climatisation (142) ayant une pluralité de modes de fonctionnement ;
un système d'air de purge (143) conçu pour fournir de l'air sous pression au système de climatisation (142), le système d'air de purge (143) ayant une pluralité d'orifices de purge (132, 134, 135), chaque orifice de purge (132, 134, 135) étant en communication fluidique avec un étage de pression différent d'un compresseur (14, 16) de la turbine à gaz (10) ;
un agencement de capteurs (176, 181, 178) conçu pour détecter une ou plusieurs conditions du système pneumatique ; **caractérisé par**
un système de commande (170, 172, 174) conçu pour :
déterminer un ou plusieurs modes de fonctionnement du système de climatisation aptes à fournir une exigence de fonctionnement du système de climatisation ;
déterminer quel orifice de purge (132, 134, 135) ou combinaison d'orifices de purge (132, 134, 135) est apte à actionner chaque mode de fonctionnement du système de climatisation dans les conditions du système pneumatique déterminées ; et
sélectionner la combinaison de modes de fonctionnement du système de climatisation déterminés et d'orifice de purge déterminé (132, 134, 135) ou une combinaison d'orifices de purge (132, 134, 135) qui nécessitent le fonctionnement de l'orifice de purge ayant la plus basse pression ou une combinaison d'orifices de purge.

11. Système selon la revendication 10, le système de commande (170, 172, 174) comprenant un dispositif de commande (172) de système d'air de purge et un dispositif de commande (174) de système de climatisation.

12. Système selon la revendication 10 ou 11, le dispositif de commande (172) de système d'air de purge étant conçu pour modéliser le système de climatisation (142), ordonner au dispositif de commande (174) de système de climatisation de sélectionner un mode de fonctionnement du système de climatisation qui est apte à fournir une exigence de fonctionnement du système de climatisation utilisant la pression de service la plus basse, et sélectionner l'orifice de purge de plus basse pression (132, 134, 135) ou une combinaison d'orifices de purge (132, 134, 135) aptes à fournir cette pression.

13. Système selon la revendication 10 ou 11, le dispositif de commande (174) de système de climatisation étant conçu pour sélectionner un mode de fonctionnement du système de climatisation qui est apte à fournir une exigence de fonctionnement du système de climatisation à l'aide de la pression de service minimale, et le dispositif de commande (172) de système d'air de purge étant conçu pour sélectionner l'orifice de purge de pression la plus basse (132, 134, 135) ou une combinaison d'orifices de purge (132, 134, 135) aptes à fournir cette pression.

14. Système selon l'une quelconque des revendications 10 à 13, le système de commande (170, 172, 174) comprenant une ou plusieurs tables de recherche ou algorithmes comprenant des valeurs de consommation de carburant spécifiques correspondantes ou des exigences de pression pour chaque condition du système d'air de purge (143) et mode de fonctionnement du système de climatisation (142).

15. Système selon l'une quelconque des revendications 10 à 14, le système de commande (170, 172, 174) comprenant une ou plusieurs tables de recherche ou algorithmes comprenant des conditions de la turbine à gaz (10) correspondant et des pressions d'orifice de purge (132, 134, 135).
